(19) Europäisches Patentamt
European Patent Office
Office européen des brevets

(11) **EP 4 012 818 A1**

(12) **EUROPEAN PATENT APPLICATION**
published in accordance with Art. 153(4) EPC

(43) Date of publication:
**15.06.2022 Bulletin 2022/24**

(21) Application number: **19942081.1**

(22) Date of filing: **30.11.2019**

(51) International Patent Classification (IPC):
**H01M 10/44** (2006.01)     **H01M 10/04** (2006.01)

(52) Cooperative Patent Classification (CPC):
Y02E 60/10; Y02P 70/50

(86) International application number:
**PCT/CN2019/122238**

(87) International publication number:
**WO 2021/031447 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.08.2019 CN 201910762492**

(71) Applicant: **Guangdong Lyric Robot Automation
Co., Ltd.
Huicheng District
Huizhou
Guangdong 516000 (CN)**

(72) Inventors:
• **GUO, Qiuming
Huizhou, Guangdong 516000 (CN)**
• **CAO, Yong
Huizhou, Guangdong 516000 (CN)**
• **ZHOU, Wenpeng
Huizhou, Guangdong 516000 (CN)**
• **LIU, Jing
Huizhou, Guangdong 516000 (CN)**
• **CHEN, Bin
Huizhou, Guangdong 516000 (CN)**
• **DU, Yixian
Huizhou, Guangdong 516000 (CN)**

(74) Representative: **Purdylucey Intellectual Property
6-7 Harcourt Terrace
D02 FH73 Dublin 2 (IE)**

(54) **MANUFACTURING CONTROL SYSTEM AND METHOD**

(57) Provided are a manufacturing control system and method. The manufacturing control system comprises: a feeding apparatus, a clamp apparatus, and a carrying apparatus, wherein the feeding apparatus is used for identifying battery cell models of received battery cells, sending the battery cell models to an upper computer, storing the received battery cells after the upper computer determines that the battery cell models meet conditions, and performing a binding operation on the battery cell meeting the conditions after a number of the stored battery cells meeting the conditions reaches a set number, so as to obtain an initial material; the clamp apparatus is used for testing the initial material to obtain a material to be discharged; and the carrying apparatus is used for, according to a scheduling signal sent by the upper computer, moving an object to be moved between the feeding apparatus and the clamp apparatus, wherein the object to be moved comprises the battery cell, the initial material and the material to be discharged.

FIG. 1

**Description**

**TECHNICAL FIELD**

The present application relates to the field of manufacturing industry control technologies, and more particularly, to a manufacturing control system and method.

**BACKGROUND**

In the manufacturing industry, all production systems can improve a manufacturing speed through a process operation. However, an existing manufacturing apparatus mostly produces one of specific products in a targeted way, which is difficult to meet a model change requirement of production, resulting in a small production application range of manufacturing apparatus.

**SUMMARY**

In view of this, the embodiments of the present application aim to provide a manufacturing control system and method. The present application can meet the needs of various production products, thus achieving the effect that the manufacturing control system can be applied in a wider range.

In a first aspect, an embodiment of the present application provides a manufacturing control system, comprising a feeding apparatus, a clamp apparatus, and a carrying apparatus, wherein:

the feeding apparatus is used for identifying battery cell models of received battery cells, sending the battery cell models to an upper computer, storing the received battery cells after the upper computer determines that the battery cell models meet conditions, and performing a binding operation on the battery cells meeting the conditions after a number of the stored battery cells meeting the conditions reaches a set number, so as to obtain an initial material;

the clamp apparatus is used for testing the initial material to obtain a material to be discharged; and

the carrying apparatus is used for, according to a scheduling signal sent by the upper computer, moving an object to be moved between the feeding apparatus and the clamp apparatus, wherein the object to be moved comprises the battery cell, the initial material and the material to be discharged.

According to the manufacturing control system provided by some embodiments of the present application, the manufacturing control system can be more automated by cooperation of the feeding apparatus, the clamp apparatus, and the carrying apparatus. Further, the feeding apparatus identifies the battery cell models of the received battery cells, and sends the battery cell models to the upper computer for verification, the battery cell model is used as one battery cell in the initial material for subsequent processing after passing the verification, so that the models are identified, and the battery cells meeting the conditions are selected according to current needs. Based on the fact that the feeding apparatus may identify the models first before using the battery cells, according to the current needs, the battery cells may be used as long as the battery cells meet the current needs, so that the models of the received battery cells of the manufacturing control system may not be limited, or the manufacturing control system may not only process one model of battery cell, thus improving an application range of the manufacturing control system.

In combination with the first aspect, the embodiment of the present application provides a first possible implementation of the first aspect, wherein: the manufacturing control system further comprises:

an unloading apparatus used for performing a discharging preparation operation on the received material to be discharged; and

the carrying apparatus further used for moving the material to be discharged from the clamp apparatus to the unloading apparatus.

The manufacturing control system provided by some embodiments of the present application may also be additionally provided with the unloading apparatus, which may discharge the material to be discharged from a same outlet, so that the manufacturing control system may more orderly and better implement effective control of flow.

In combination with the first aspect, the embodiment of the present application provides a second possible implementation of the first aspect, wherein: the carrying apparatus comprises:

an alabaster paper detection assembly used for performing alabaster paper detection on an empty fixture to be detected, and moving the empty fixture to be detected to the feeding apparatus after the alabaster paper detection is qualified upon detection.

According to the manufacturing control system provided by some embodiments of the present application, the alabaster paper detection may also be performed before the battery cells enter the feeding apparatus, so that the manufacturing control system may detect whether alabaster paper models are replaced correctly and whether newly replaced alabaster paper is skewed or damaged after the alabaster paper models may need to be replaced due to different depths of alabaster paper materials needed for producing different models of battery cells, thus reducing defective materials produced during subsequent production, and improving a yield of the manufacturing control system.

In combination with the first aspect, the embodiment of the present application provides a third possible implementation of the first aspect, wherein: the carrying apparatus further comprises: an upper shaft, a lower shaft, and an upper-lower-shaft grating-ruler closed-loop detection device;

the upper shaft and the lower shaft are used for clamping the object to be moved; and

the upper-lower-shaft grating-ruler closed-loop detection device is used for detecting a detection distance between the upper shaft and the lower shaft, comparing the detection distance with a current distance between the upper shaft and the lower shaft, and sending an alarm signal in the case that a distance difference between the detection distance and the current distance determined by the upper shaft and the lower shaft is greater than a first set threshold.

According to the manufacturing control system provided by some embodiments of the present application, the distance between the upper shaft and the lower shaft may also be detected by the upper-lower-shaft grating-ruler closed-loop detection device, then whether the distance between the upper shaft and the lower shaft is reasonable may be determined by distance comparison, and in the case of being unreasonable, an alarm may be given to inform relevant personnel, so that when the distance between the upper shaft and the lower shaft is unreasonable, effective rectification can be implemented, thus improving a reasonability during production by the manufacturing control system.

In combination with the first aspect, the embodiment of the present application provides a fourth possible implementation of the first aspect, wherein: the carrying apparatus further comprises: a pressure detection device; and the pressure detection device is used for, after the carrying apparatus moves a pressure verification fixture to a clamp apparatus to be verified, detecting a current pressure value of the clamp apparatus to be verified when the clamp apparatus to be verified is operated, comparing the current pressure value with a set pressure value of the clamp apparatus to be verified, and sending an alarm signal if an absolute value of a pressure difference between the current pressure value and the set pressure value of the clamp apparatus to be verified is greater than a second set threshold.

According to the manufacturing control system provided by some embodiments of the present application, the pressure of the clamp apparatus to be verified may also be detected by the pressure detection device, then whether the pressure capable of being applied by the clamp apparatus to be verified is normal may be determined by pressure comparison, and in the case of being abnormal, an alarm may be given to inform relevant personnel, so that when the pressure capable of being applied by the clamp apparatus to be verified is abnormal, effective rectification can be implemented, thus improving a reliability during production by the manufacturing control system.

In combination with the first aspect, the embodiment of the present application provides a fifth possible implementation of the first aspect, wherein: the carrying apparatus further comprises: a temperature detection device; and the temperature detection device is used for detecting temperature data at a position of the carrying apparatus.

According to the manufacturing control system provided by some embodiments of the present application, the temperature data at the position of the carrying apparatus may also be detected as temperature feedback, so that relevant personnel can better understand operation of the manufacturing control system.

In combination with the first aspect, the embodiment of the present application provides a sixth possible implementation of the first aspect, wherein: the feeding apparatus comprises: a controller, a scanner, and a binding device;

the controller is used for controlling the scanner to identify the battery cell models of the received battery cells, and sending the battery cell models to the upper computer;

the scanner is used for identifying the battery cell models of the received battery cells; and

the binding device is used for performing the binding operation on the set number of battery cells meeting the conditions, so to obtain the initial material.

According to the manufacturing control system provided by some embodiments of the present application, the feeding apparatus comprises the controller, the scanner, and the binding device, and the feeding apparatus may detect the models of the battery cells, and perform subsequent binding operation by cooperation of the controller, the scanner, and the binding device.

In combination with the first aspect, the embodiment of the present application provides a seventh possible implementation of the first aspect, wherein: the clamp apparatus comprises a formation clamp; and the formation clamp is used for performing a formation test on the initial material.

According to the manufacturing control system provided by some embodiments of the present application, the clamp apparatus may also comprise the formation clamp, thus performing the formation test on the initial material.

In combination with the seventh possible implementation of the first aspect, the embodiment of the present application provides an eighth possible implementation of the first aspect, wherein: the manufacturing control system further comprises: a lower computer;

the formation clamp is further used for adjusting a pressure applied to the initial material to a first set value after receiving the initial material, and sending a test request command to the lower computer after a temperature applied to the initial material reaches a second set value; and

the lower computer is used for performing charging and discharging activation tests on the initial material after receiving the test request command.

According to the manufacturing control system provided by some embodiments of the present application, the clamp apparatus may also comprise a capacity clamp, thus integrating the formation test and a capacity test performed on the initial material, and improving a production efficiency of products.

In combination with the seventh possible implementation of the first aspect, the embodiment of the present application provides a ninth possible implementation of the first aspect, wherein: the clamp apparatus comprises a capacity clamp; and the capacity clamp is used for performing a capacity test on the initial material.

According to the manufacturing control system provided by some embodiments of the present application, the clamp apparatus may also comprise the lower computer, and the formation test may be performed on the material by cooperation of the lower computer and the formation clamp, thus activating the material.

In combination with the ninth possible implementation of the first aspect, the embodiment of the present application provides a tenth possible implementation of the first aspect, wherein: the clamp apparatus comprises a plurality of formation clamps and a plurality of capacity clamps;
wherein, the number of the formation clamps is smaller than that of the capacity clamps.

According to the manufacturing control system provided by some embodiments of the present application, since a time needed for the capacity test is longer than that needed for the formation test, more capacity clamps are provided, thus relatively balancing a production time, and improving a production efficiency.

In a second aspect, an embodiment of the present application provides a manufacturing control method, comprising the following steps of:

identifying battery cell models of received battery cells;

sending the battery cell models to an upper computer;

after the upper computer determines that the battery cell models meet conditions, storing the received battery cells, and performing a binding operation on the battery cells meeting the conditions after a number of the stored battery cells meeting the conditions reaches a set number, so as to obtain an initial material; and

testing the initial material to obtain a material to be discharged.

According to the manufacturing control method provided by some embodiments of the present application, the manufacturing control system can be more automated by cooperation of the feeding apparatus, the clamp apparatus, and the carrying apparatus. Further, the feeding apparatus identifies the battery cell models of the received battery cells, and sends the battery cell models to the upper computer for verification, the battery cell model is used as one battery cell in the initial material for subsequent processing after passing the verification, so that the models are identified, and the battery cells meeting the conditions are selected according to current needs. Based on the fact that the feeding apparatus may identify the models first before using the battery cells, according to the current needs, the battery cells may be used as long as the battery cells meet the current needs, so that the models of the received battery cells of the manufacturing control system may not be limited, or the manufacturing control system may not only process one model of battery cell, thus improving an application range of the manufacturing control system.

To make the above objects, features and advantages of the present application more obvious and easier to understand, the following embodiments are given in detail with reference to the drawings attached.

**BRIEF DESCRIPTION OF THE DRAWINGS**

In order to more clearly illustrate the technical solutions of the embodiments of the present application, the drawings that are required to describe the embodiments will be briefly introduced below. It should be understood that the drawings below only illustrate some embodiments of the present application, and should not be regarded as limiting the scope. Those of ordinary skills in the art can obtain other related drawings according to these drawings without going through creative work.

FIG. 1 is a schematic block diagram of a manufacturing control system provided by an embodiment of the present application matched with an upper computer.

FIG. 2 is a schematic block diagram of the manufacturing control system provided by some embodiments of the present application matched with the upper computer and a lower computer.

FIG. 3 is a flow chart of a manufacturing control method provided by an embodiment of the present application.

Reference numerals: 10 refers to upper computer; 100 refers to feeding apparatus; 200 refers to clamp apparatus; 210 refers to formation clamp; 220 refers to capacity clamp; 300 refers to unloading apparatus; 400 refers to carrying apparatus; and 30 refers to lower computer.

**DETAILED DESCRIPTION**

The technical solutions of the embodiments of the present application will be described hereinafter with reference to the drawings in the embodiments of the present application.
It should be noted that: similar reference numerals and letters indicate similar items in the following drawings, so once one item is defined in one drawing, it does not need to be further defined and explained in the following drawings. Meanwhile, in the description of the present application, the terms "first" and "second" are used to distinguish the descriptions only and cannot be understood as indicating or implying relative importance.

**Embodiment one**

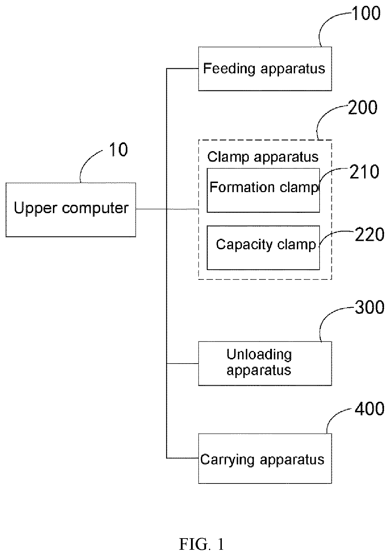

The embodiment of the present application provides a manufacturing control system. As shown in FIG. 1, the manufacturing control system in the embodiment comprises a feeding apparatus 100, a clamp apparatus 200, and a carrying apparatus 400.
The feeding apparatus 100, the clamp apparatus 200, the carrying apparatus 400, and other apparatuses in the manufacturing control system in the embodiment may be in communication connection with one or more upper computers 10. After receiving a control command from the upper computer 10, the feeding apparatus 100, the clamp apparatus 200, the carrying apparatus 400, and other apparatuses perform corresponding actions according to the received control command.
In some embodiments, the feeding apparatus 100, the clamp apparatus 200, and the carrying apparatus 400 above are all connected with a controller, and the feeding apparatus 100, the clamp apparatus 200, and the carrying apparatus 400 may communicate with the upper computer 10 through the controller. Exemplarily, the feeding apparatus 100, the clamp apparatus 200, and the carrying apparatus 400 above may be respectively connected with the controller, and the feeding apparatus 100, the clamp apparatus 200, and the carrying apparatus 400 may communicate with the upper computer 10 through their respective controllers. Exemplarily, the feeding apparatus 100, the clamp apparatus 200, and the carrying apparatus 400 above may also be jointly connected with one controller, and the feeding apparatus 100, the clamp apparatus 200, and the carrying apparatus 400 may all communicate with the upper computer 10 through the jointly connected controller.
Exemplarily, the controller may be a PLC (Programmable Logic Controller).
In some embodiments, a PLC of each apparatus of the manufacturing control system may communicate with the upper computer 10 by using an Ethernet ADS (Automation Device Specification).
In some embodiments, in the embodiment, a communication mode between the PLC and the upper computer 10 may be as follows: the PLC assigns information to be transmitted to the upper computer 10 to a corresponding variable, and the upper computer 10 reads a value of the corresponding variable to acquire corresponding information.
For example, a two-dimensional code of a first station needs to be transmitted to the upper computer 10, and then the two-dimensional code of the first station may be assigned to the corresponding variable, such as ProductData01.

strVariable01. The upper computer 10 may read a value of the variable ProductData01.strVariable01 to acquire the two-dimensional code of the station above.

In an example, a variable ST02EnableRead corresponding to a second station has been currently assigned as 1, and then the upper computer 10 may read a value of the variable corresponding to the second station for identification.

After reading the value of the variable corresponding to the second station, the upper computer 10 needs to feed back processing corresponding to the value of the variable. In an example, if a current processing result corresponding to the second station of the upper computer 10 is OK, the upper computer 10 assigns the ST02EnableRead as 2, and if the current processing result corresponding to the second station is NG, the upper computer 10 assigns the ST02EnableRead as 4. If the upper computer 10 is not needed to process data, whether the upper computer 10 finishes reading is waited, and then the upper computer 10 assigns the ST02EnableRead as 2; otherwise, no assignment is made.

In the embodiment, the feeding apparatus 100 is used for identifying battery cell models of received battery cells, sending the battery cell models to an upper computer 10, storing the received battery cells after the upper computer 10 determines that the battery cell models meet conditions, and performing a binding operation on the battery cells meeting the conditions after the number of the stored battery cells meeting the conditions reaches a set number, so as to obtain an initial material.

In some embodiments, PLCs of apparatuses of the manufacturing control system may communicate with each other by using an Ethernet ADS (Automation Device Specification).

Exemplarily, in the embodiment, a communication mode between the PLCs of the apparatuses of the manufacturing control system may be as follows: a built-in program of a first apparatus may assign a program intermediate variable to an output link variable, an input link variable of a second apparatus may acquire the output link variable of the first apparatus through the ADS communication mode to be used as a value of the input link variable, and a program of the second apparatus may assign the input link variable to a program intermediate variable of the program, thus implementing data exchange between the PLCs of the apparatuses.

Taking communication between the carrying apparatus 400 and the feeding apparatus 100 as an example: in a program of the feeding apparatus 100, a program intermediate variable ST01.InfeedState (a state variable of the feeding apparatus 100) will be assigned to an output link variable DataOuts[0] of the feeding apparatus 100, then an input link variable DataIns[1000] of the carrying apparatus 400 will acquire the output link variable DataOuts[0] of the feeding apparatus 100 through ADS communication, and the input link variable DataIns[1000] of the carrying apparatus 400 will be assigned to the corresponding program intermediate variable ST01.InfeedState in a program of the carrying apparatus 400.

In an implementation, the feeding apparatus 100 may comprise a controller, a scanner, and a binding device.

The controller may be used for controlling the scanner to identify the battery cell models of the received battery cells, and sending the battery cell models to the upper computer 10. In some embodiments, the controller may generate a control signal when the battery cell models may need to be obtained, and transmit the control signal to the scanner, so that the scanner may identify the battery cell models after receiving the control signal.

The scanner is used for identifying the battery cell models of the received battery cells. Exemplarily, the battery cells may carry identification codes for identifying the battery cell models. For example, the identification code may be a two-dimensional code, a bar code, a ring code, and the like.

The binding device is used for performing the binding operation on the set number of battery cells meeting the conditions, so to obtain the initial material.

In some embodiments, the feeding apparatus 100 may also comprise a mobile robot and a discharging robot. The mobile robot clamps and moves the received battery cells, and after performing rectification and positioning operations by a first turntable station and a second turntable station, the received battery cells are handed over to the discharging robot. The discharging robot may put the battery cells meeting the conditions into a tray fixture, and after the battery cells in the tray fixture reach a specified number, the binding device performs the binding operation on the specified number of battery cells. In some embodiments, the specified number above may be determined according to a specifically generated battery module, for example, the specified number may be fifty-six.

Exemplarily, when the mobile robot moves the battery cells, the scanner may scan the identification codes of the battery cells above, so as to acquire the battery cell models, and then send the obtained battery cell models to the upper computer 10. In an example, the controller may use an ADS communication protocol to transmit the battery cell models to the upper computer 10 after acquiring the battery cell models identified by the scanner.

After receiving the battery cell model of the battery cell, the upper computer 10 may detect whether the battery cell model is a required model produced currently. In some embodiments, the upper computer 10 may also store detection results of stages of the battery cell, and may also detect whether a preamble detection process corresponding to the battery cell model is qualified according to the battery cell model.

In the embodiment, the clamp apparatus 200 is used for testing the initial material to obtain a material to be discharged.

In an optional implementation, the clamp apparatus 200 comprises a formation clamp 210, and the formation clamp is used for performing a formation test on the initial material.

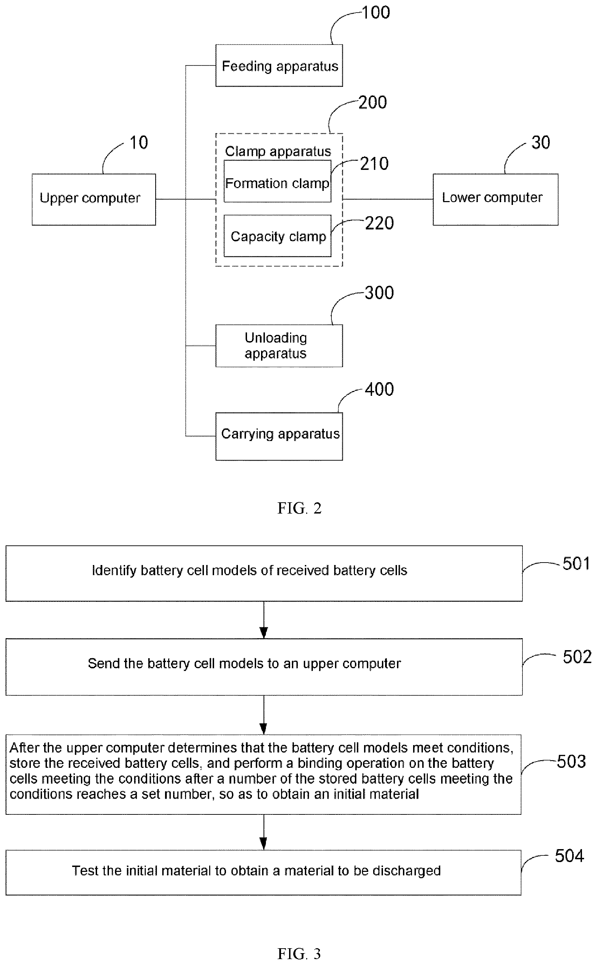

In some embodiments, as shown in FIG. 2, the manufacturing control system also comprises: a lower computer 30.

In the embodiment, a formation test process may be as follows: the formation clamp 210 adjusts a pressure applied to the initial material to a first set value after receiving the initial material, and sends a test request command to the lower computer 30 after a temperature applied to the initial material reaches a second set value. The lower computer 30 is used for performing charging and discharging activation tests on the initial material after receiving the test request command. The first set value above may be a pressure value needed for the formation test. The second set value may be a temperature value needed for the formation test. The first set value and the second set value may be determined according to specific test requirements, and the embodiment of the present application is not limited to specific values of the first set value and the second set value.

In an optional implementation, the clamp apparatus 200 comprises a capacity clamp 220. The capacity clamp 220 is used for performing a capacity test on the initial material.

In the embodiment, a capacity test process may be as follows: the capacity clamp 220 adjusts a pressure applied to the initial material to a third set value after receiving the initial material, and sends a test request command to the lower computer 30 after a temperature applied to the initial material reaches a fourth set value. The lower computer 30 is used for performing the capacity test on the initial material after receiving the test request command. The third set value above may be a pressure value needed for the capacity test. The fourth set value may be a temperature value needed for the capacity test. The third set value and the fourth set value may be determined according to specific test requirements, and the embodiment of the present application is not limited to specific values of the third set value and the fourth set value.

In some embodiments, the clamp apparatus 200 comprises a plurality of formation clamps 210 and a plurality of capacity clamps 220.

Since the duration of the capacity test is longer than that of the formation test, based on this consideration, the number of the formation clamps 210 may be smaller than that of the capacity clamps 220.

In an example, the clamp apparatus 200 may comprise five formation clamps 210 and thirteen capacity clamps 220, in a total of eighteen clamps. In some embodiments, the numbers of the formation clamps 210 and the capacity clamps 220 may be adjusted according to current production situations.

In some embodiments, during production by the manufacturing control system, the initial material may be subjected to the formation test first, and then subjected to the capacity test.

After finishing the formation test and the capacity test, the obtained material to be discharged may be prepared for discharging.

In an optional implementation, the manufacturing control system may also comprise: an unloading apparatus 300, and the unloading apparatus is used for performing a discharging preparation operation on the received material to be discharged.

Taking out the material to be discharged from the unloading apparatus 300 may indicate completion of a whole production flow.

In the embodiment, materials and battery cells may be moved may be moved between various apparatuses by the carrying apparatus 400.

In the embodiment, the carrying apparatus 400 is used for, according to a scheduling signal sent by the upper computer 10, moving an object to be moved between the feeding apparatus 100 and the clamp apparatus 200. The object to be moved that may be moved by the carrying apparatus 400 may comprise the battery cell, the initial material, the material to be discharged, and the tray fixture.

Exemplarily, the carrying apparatus 400 may, according to the received scheduling signal of the upper computer 10, start a corresponding action logic.

In an example, if the scheduling signal sent by the upper computer 10 is a scheduling signal of discharge of the feeding apparatus 100, the carrying apparatus 400 may move and place the initial material of the feeding apparatus 100 to the formation clamp 210.

If the scheduling signal sent by the upper computer 10 is a scheduling signal of discharge of the formation clamp 210, the carrying apparatus 400 may move and place the material subjected to formation to the capacity clamp 220.

If the scheduling signal sent by the upper computer 10 is a scheduling signal of discharge of the capacity clamp 220, the carrying apparatus 400 may move and place the material subjected to capacity test to the unloading apparatus 300.

If the scheduling signal sent by the upper computer 10 is a scheduling signal of discharge of the unloading apparatus 300, the carrying apparatus 400 may move and place the empty tray fixture to an empty fixture loading place of the feeding apparatus 100.

In some embodiments, in the embodiment, the carrying apparatus 400 may be a RGV (Rail Guided Vehicle) trolley.

In an optional implementation, the carrying apparatus 400 may comprise an alabaster paper detection assembly.

The alabaster paper detection assembly may be used for performing alabaster paper detection on an empty fixture to be detected, and moving the empty fixture to be detected to the feeding apparatus 100 after the alabaster paper detection is qualified upon detection.

In some embodiments, the following formula may be used during detection of the alabaster paper detection assembly:

$$CheckSignal1 := (iCheckSignal * 200)/32768.$$

CheckSignall represents a real value subjected to detection value conversion, iCheckSignal represents an original reading value, which is a value detected by the alabaster paper detection assembly, and an input 1V voltage receiving numerical value is 32768.

An alabaster paper detection function refers to a function of detecting whether alabaster paper models are replaced correctly and whether newly replaced alabaster paper is skewed or damaged after the alabaster paper models are replaced due to different depths of alabaster paper materials needed for producing different models of battery cells by the apparatuses.

By comparing the CheckSignal1 above with a preset reference value, whether alabaster paper of an empty fixture to be detected is skewed is determined.

In an example, the carrying apparatus 400 takes one empty fixture to be detected and then detects whether the alabaster paper is skewed. If the alabaster paper of the empty fixture to be detected is skewed, the empty fixture to be detected is placed at an alabaster paper skew replacement place for replacement. If the alabaster paper of the empty fixture to be detected is not skewed, a normal flow is performed to put the alabaster paper to be detected into an empty fixture loading port corresponding to the feeding apparatus 100.

The iCheckSignal in the formula above is a value sent to the PLC of the carrying apparatus 400 after a laser distance sensor is powered, and the numerical value is too large for calculation. The CheckSignall is a reference value, and the numerical value of the CheckSignall is small after calculation, which is convenient for comparison and more intuitive.

In an optional implementation, the carrying apparatus 400 may comprise: an upper shaft, a lower shaft, and an upper-lower-shaft grating-ruler closed-loop detection device.

The upper shaft and the lower shaft are used for clamping the object to be moved.

In some embodiments, the upper-lower-shaft grating-ruler closed-loop detection device may comprise a distance sensor. The distance sensor is used for detecting a distance between the upper shaft and the lower shaft.

In some embodiments, the upper-lower-shaft grating-ruler closed-loop detection device may comprise an alarm apparatus. The alarm apparatus outputs an alarm signal when receiving an alarm command outputted from the PLC corresponding to the carrying apparatus 400.

The upper-lower-shaft grating-ruler closed-loop detection device is used for detecting a detection distance between the upper shaft and the lower shaft, comparing the detection distance with a current distance between the upper shaft and the lower shaft, and sending an alarm signal in the case that a distance difference between the detection distance and the current distance between the upper shaft and the lower shaft is greater than a first set threshold.

In some embodiments, the current distance between the upper shaft and the lower shaft above may be a distance determined by a motor of the carrying apparatus 400.

Exemplarily, upper-lower-shaft grating-ruler closed-loop detection may be achieved by the following formula:

$$OutActCheckPos := ((ActCheckPos - ReadActPos) * 0.02)/3.90 + DIF.$$

OutActCheckPos represents an output measurement distance, ActCheckPos represents a current real-time reading number of a grating ruler, ReadActPos represents a read origin position value of the upper and lower shafts, and DIF represents a compensation coefficient.

Comparing the OutActCheckPos above with the first set threshold, if the distance difference between the detection distance and the current distance between the upper shaft and the lower shaft is greater than the first set threshold, the alarm signal is sent.

When a fully closed loop is used in the upper shaft and the lower shaft of the carrying apparatus 400, movements of the upper shaft and the lower shaft may be detected. For a semi-closed loop, a command is sent to wait for a result, and the result is used to judge whether a target is executed or not, and whether the execution is correct or not, and an execution action cannot be changed halfway. For the fully closed loop, whether an execution process is erroneous is monitored in real time after sending the command, and an error may be corrected or an alarm may be given in time.

In an example, if the distance between the upper shaft and the lower shaft of the carrying apparatus 400 is positioned as 1000, which means that the distance between the upper shaft and the lower shaft is 1 m, an allowable error may be 5 mm, which means that the first set threshold above is 5 mm. If a detected shaft operation distance between the upper shaft and the lower shaft during execution and a distance detected by a distance sensor of the upper-lower-shaft grating-ruler closed-loop detection device exceed the error of 5 mm, the alarm signal is outputted.

In an optional implementation, the carrying apparatus 400 may comprise a pressure detection device.

In some embodiments, the pressure detection device may comprise a pressure sensor. The pressure sensor may be used for detecting a current pressure value of a clamp apparatus 200 to be verified.

In some embodiments, the pressure detection device may comprise an alarm apparatus. The alarm apparatus outputs an alarm signal when receiving an alarm command outputted from the PLC corresponding to the carrying apparatus 400.

The pressure detection device is used for, after the carrying apparatus 400 moves a pressure verification fixture to a clamp apparatus 200 to be verified, detecting a current pressure value of the clamp apparatus 200 to be verified when the clamp apparatus 200 to be verified is operated, comparing the current pressure value with a set pressure value of the clamp apparatus 200 to be verified, and sending an alarm signal if an absolute value of a pressure difference between the current pressure value and the set pressure value of the clamp apparatus 200 to be verified is greater than a second set threshold.

In an example, after spot inspection of the carrying apparatus 400 is started, the carrying apparatus 400 clamps and puts the pressure verification fixture into a clamp to be verified (the formation clamp 210 or the capacity clamp 220), so as to simulate a state of a battery cell tightly pressed in the clamp to be verified, and detect whether a stress of the pressure verification fixture is within a normal range. For example, when a set pressure of the clamp to be verified is 1000 KG, if a numerical value read by spot inspection when tightly pressing the clamp to be verified ranges from 970 KG to 1030 KG, it is indicated that a current clamp pressure of the clamp to be verified is normal, and the battery cells may be produced; and if the numerical value exceeds the range of 970 KG to 1030 KG, the alarm signal is outputted. Therefore, relevant personnel are informed to check a condition of the clamp to be verified, and the relevant personnel may check a structure or a line of the clamp to be verified.

In some embodiments, the carrying apparatus 400 may be provided with only one alarm apparatus. If the distance difference between the detection distance and the current distance between the upper shaft and the lower shaft is greater than the first set threshold, or if the absolute value of the pressure difference between the current pressure value and the set pressure value of the clamp apparatus 200 to be verified is greater than the second set threshold, the alarm may be outputted through the alarm apparatus.

In an optional implementation, the carrying apparatus 400 may comprise a temperature detection device used for detecting temperature data at a position of the carrying apparatus 400.

In some embodiments, the temperature detection device may be an infrared thermometer mounted on the carrying apparatus 400. Exemplarily, the temperature detection device may be used for detecting a temperature of each channel of the clamp apparatus 200. Further, the detected temperature may also be compared with a measured temperature of a thermocouple of the clamp apparatus 200.

The manufacturing control system can be more automated by cooperation of all apparatuses of the manufacturing control system provided by some embodiments of the present application above. Further, the feeding apparatus 100 identifies the battery cell models of the received battery cells, and sends the battery cell models to the upper computer 10 for verification, the battery cell model is used as one battery cell in the initial material for subsequent processing after passing the verification, so that the models are identified, and the battery cells meeting the conditions are selected according to current needs. Based on the fact that the feeding apparatus 100 may identify the models first before using the battery cells, according to the current needs, the battery cells may be used as long as the battery cells meet the current needs, so that the models of the received battery cells of the manufacturing control system may not be limited, or the manufacturing control system may not only process one model of battery cell, thus improving an application range of the manufacturing control system.

Further, by integrating the formation clamp and the capacity clamp in the manufacturing control system, the manufacturing control system can integrate hot-pressing formation and capacity test into one machine. When in use, three modes may be set, comprising: full formation, full capacity test, or formation and capacity tests, so that the manufacturing control system is more flexible, and is capable of meeting needs of different scenarios.

Further, the feeding apparatus is provided with the scanner to collect data of an object during processing, so that the data may be transmitted and exchanged, thus tracing the data.

**Embodiment two**

FIG. 3 is a flow chart of a manufacturing control method provided by an embodiment of the present application. A specific flow shown in FIG. 3 will be described in detail hereinafter.

In step 501, battery cell models of received battery cells are identified.

In step 502, the battery cell models are sent to an upper computer.

In step 503, after the upper computer determines that the battery cell models meet conditions, the received battery cells are stored, and a binding operation is performed on the battery cells meeting the conditions after a number of the stored battery cells meeting the conditions reaches a set number, so as to obtain an initial material.

In step 504, the initial material is tested to obtain a material to be discharged.

In some embodiments, the step 504 may comprise: performing a formation test on the initial material.

In some embodiments, the step 504 may comprise: performing a capacity test on the initial material.

In some embodiments, the manufacturing control method may also comprise the following steps of: performing alabaster paper detection on an empty fixture to be detected, and moving the empty fixture to be detected to the feeding apparatus after the alabaster paper detection is qualified upon detection.

In some embodiments, the manufacturing control method may also comprise the following steps of: detecting a detection distance between an upper shaft and a lower shaft of a carrying apparatus 400, comparing the detection distance with a current distance between the upper shaft and the lower shaft, and sending an alarm signal in the case that a distance difference between the detection distance and the current distance determined by the upper shaft and the lower shaft is greater than a first set threshold.

In some embodiments, the manufacturing control method may also comprise the following steps of: after the carrying apparatus 400 moves a pressure verification fixture to a clamp apparatus to be verified, detecting a current pressure value of the clamp apparatus to be verified when the clamp apparatus 200 to be verified is operated, comparing the current pressure value with a set pressure value of the clamp apparatus to be verified, and sending an alarm signal if an absolute value of a pressure difference between the current pressure value and the set pressure value of the clamp apparatus to be verified is greater than a second set threshold.

In some embodiments, the manufacturing control method may also comprise the following step of: detecting temperature data at a position of the carrying apparatus 400.

In the several embodiments provided in the present application, it should be understood that the disclosed system and method may also be implemented in other ways. The system embodiment described above is only exemplary, for example, the flow charts and block diagrams in the drawings show the possibly implemented architectures, functions, and operations of the system, the method and the computer program product according to the several embodiments of the present application. In this regard, each block in the flow charts or the block diagrams may represent one module, one program segment, or a part of code. The module, the program segment, or the part of code contains one or more executable instructions for implementing specified logical functions. It should also be noted that in some alternative implementations, the functions noted in the blocks may also occur in a different order from those noted in the drawings. For example, two consecutive blocks may actually be executed in substantially parallel, and sometimes may be executed in a reverse order, depending on the functions involved. It should also be noted that each block in the block diagrams and/or flow charts, and the combinations of the blocks in the block diagrams and/or flow charts, may be implemented with dedicated hardware-based systems that perform specified functions or actions, or may be implemented with the combinations of dedicated hardware and computer instructions.

The above descriptions are only preferred embodiments of the present application and are not intended to limit the present application. For those skilled in the art, the present application may have various modifications and changes. Any modification, equivalent replacement, or improvement made without departing from the spirit and principle of the present application should fall within the scope of protection of the present application. It should be noted that: similar reference numerals and letters indicate similar items in the following drawings, so once one item is defined in one drawing, it does not need to be further defined and explained in the following drawings.

The above descriptions are only specific embodiments of the present application, but the scope of protection of the present application is not limited to this. Those skilled in the art can easily think of changes or substitutions within the technical scope disclosed by the present application, and all the changes or substitutions should be covered by the scope of protection of the present application. Therefore, the scope of protection of the present application should be subjected to the scope of protection of the claims.

**Claims**

1. A manufacturing control system, comprising a feeding apparatus, a clamp apparatus, and a carrying apparatus, wherein:

   the feeding apparatus is used for identifying battery cell models of received battery cells, sending the battery cell models to an upper computer, storing the received battery cells after the upper computer determines that the battery cell models meet conditions, and performing a binding operation on the battery cells meeting the conditions after a number of the stored battery cells meeting the conditions reaches a set number, so as to obtain an initial material;

the clamp apparatus is used for testing the initial material to obtain a material to be discharged; and

the carrying apparatus is used for, according to a scheduling signal sent by the upper computer, moving an object to be moved between the feeding apparatus and the clamp apparatus, wherein the object to be moved comprises the battery cell, the initial material and the material to be discharged.

2. The manufacturing control system of claim 1, further comprising:

an unloading apparatus used for performing a discharging preparation operation on the received material to be discharged; and

the carrying apparatus further used for moving the material to be discharged from the clamp apparatus to the unloading apparatus.

3. The manufacturing control system of claim 1, wherein the carrying apparatus comprises:
an alabaster paper detection assembly used for performing alabaster paper detection on an empty fixture to be detected, and moving the empty fixture to be detected to the feeding apparatus after the alabaster paper detection is qualified upon detection.

4. The manufacturing control system of claim 1, wherein the carrying apparatus further comprises: an upper shaft, a lower shaft, and an upper-lower-shaft grating-ruler closed-loop detection device;

the upper shaft and the lower shaft are used for clamping the object to be moved; and

the upper-lower-shaft grating-ruler closed-loop detection device is used for detecting a detection distance between the upper shaft and the lower shaft, comparing the detection distance with a current distance between the upper shaft and the lower shaft, and sending an alarm signal in the case that a distance difference between the detection distance and the current distance determined by the upper shaft and the lower shaft is greater than a first set threshold.

5. The manufacturing control system of claim 1, wherein the carrying apparatus further comprises: a pressure detection device; and

the pressure detection device is used for, after the carrying apparatus moves a pressure verification fixture to a clamp apparatus to be verified, detecting a current pressure value of the clamp apparatus to be verified when the clamp apparatus to be verified is operated, comparing the current pressure value with a set pressure value of the clamp apparatus to be verified, and sending an alarm signal if an absolute value of a pressure difference between the current pressure value and the set pressure value of the clamp apparatus to be verified is greater than a second set threshold.

6. The manufacturing control system of claim 1, wherein the carrying apparatus further comprises: a temperature detection device; and

the temperature detection device is used for detecting temperature data at a position of the carrying apparatus.

7. The manufacturing control system of claim 1, wherein the feeding apparatus comprises: a controller, a scanner, and a binding device;

the controller is used for controlling the scanner to identify the battery cell models of the received battery cells, and sending the battery cell models to the upper computer;

the scanner is used for identifying the battery cell models of the received battery cells; and

the binding device is used for performing the binding operation on the set number of battery cells meeting the conditions, so to obtain the initial material.

8. The manufacturing control system of claim 1, wherein the clamp apparatus comprises a formation clamp; and
the formation clamp is used for performing a formation test on the initial material.

9. The manufacturing control system of claim 8, further comprising: a lower computer, wherein:

the formation clamp is further used for adjusting a pressure applied to the initial material to a first set value after receiving the initial material, and sending a test request command to the lower computer after a temperature applied to the initial material reaches a second set value; and

the lower computer is used for performing charging and discharging activation tests on the initial material after receiving the test request command.

10. The manufacturing control system of claim 8, wherein the clamp apparatus comprises a capacity clamp; and the capacity clamp is used for performing a capacity test on the initial material.

11. The manufacturing control system of claim 10, wherein the clamp apparatus comprises a plurality of formation clamps and a plurality of capacity clamps; and

the number of the formation clamps is smaller than that of the capacity clamps.

12. A manufacturing control method, comprising the following steps of:

identifying battery cell models of received battery cells;

sending the battery cell models to an upper computer;

after the upper computer determines that the battery cell models meet conditions, storing the received battery cells, and performing a binding operation on the battery cells meeting the conditions after a number of the stored battery cells meeting the conditions reaches a set number, so as to obtain an initial material; and

testing the initial material to obtain a material to be discharged.

FIG. 1

~100

Feeding apparatus

~200

~10

Clamp apparatus

Formation clamp ~210

Capacity clamp ~220

~30

Upper computer

Lower computer

~300

Unloading apparatus

~400

Carrying apparatus

FIG. 2

Identify battery cell models of received battery cells ~501

Send the battery cell models to an upper computer ~502

After the upper computer determines that the battery cell models meet conditions, store the received battery cells, and perform a binding operation on the battery cells meeting the conditions after a number of the stored battery cells meeting the conditions reaches a set number, so as to obtain an initial material ~503

Test the initial material to obtain a material to be discharged ~504

FIG. 3

<div style="text-align:center">

**INTERNATIONAL SEARCH REPORT**

</div>

| International application No. |
|---|
| **PCT/CN2019/122238** |

**A.    CLASSIFICATION OF SUBJECT MATTER**

H01M 10/44(2006.01)i;   H01M 10/04(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, DWPI, SIPOABS, USTXT, EPTXT, WOTXT, CNKI: 电池, 制造, 控制, 设备, 识别, 扫描, 型号, battery, manufacture, controller, equipment, identify, scan, type

**C.    DOCUMENTS CONSIDERED TO BE RELEVANT**

| Category* | Citation of document, with indication, where appropriate, of the relevant passages | Relevant to claim No. |
|---|---|---|
| X | CN 107093761 A (EVPS NINGBO ENERGY STORAGE SYSTEM CO., LTD.) 25 August 2017 (2017-08-25)<br>description, paragraphs 17-23, and figures 1-3 | 1-12 |
| A | CN 108672320 A (GEM WUHAN URBAN MININGRESOURCES IND PAK DEVELOPMENT CO., LTD.) 19 October 2018 (2018-10-19)<br>entire document | 1-12 |
| A | CN 107681201 A (SUZHOU ANKAO ENERGY CO., LTD.) 09 February 2018 (2018-02-09)<br>entire document | 1-12 |
| A | US 2007180690 A1 (EAGLEPICHER TECHNOLOGIES LLC) 09 August 2007 (2007-08-09)<br>entire document | 1-12 |

☐ Further documents are listed in the continuation of Box C.     ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 May 2020** | **21 May 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/122238** |

| Patent document<br>cited in search report | | | Publication date<br>(day/month/year) | Patent family member(s) | | | Publication date<br>(day/month/year) |
| --- | --- | --- | --- | --- | --- | --- | --- |
| CN | 107093761 | A | 25 August 2017 | CN | 107093761 | B | 16 April 2019 |
| CN | 108672320 | A | 19 October 2018 | None | | | |
| CN | 107681201 | A | 09 February 2018 | CN | 207320255 | U | 04 May 2018 |
| US | 2007180690 | A1 | 09 August 2007 | US | 7871447 | B2 | 18 January 2011 |

Form PCT/ISA/210 (patent family annex) (January 2015)